# EUROPEAN PATENT SPECIFICATION

(11) **EP 3 967 483 B1**
(45) Date of publication and mention of the grant of the patent: **10.12.2025**
(21) Application number: 20802972.8
(22) Date of filing: 30.04.2020
(51) Int. Cl.: B29K 101/12, B29K 105/10, B29K 307/04, B29C 70/30, B29C 70/44, B29C 70/46, B29C 43/10, B29C 70/22

(54) **COMPOSITE MOLDED BODY MOLDING SYSTEM AND PRODUCTION METHOD**
VERBUNDFORMKÖRPERFORMSYSTEM UND HERSTELLUNGSVERFAHREN
SYSTÈME DE MOULAGE DE CORPS MOULÉ COMPOSITE ET PROCÉDÉ DE PRODUCTION

(30) Priority: 07.05.2019 JP 2019087775
(43) Date of publication of application: 16.03.2022
(73) Proprietor: National University Corporation Kanazawa University, Ishikawa 920-1192 (JP)
(72) Inventor: YONEYAMA Takeshi, Kanazawa-shi, Ishikawa 920-1192 (JP); KINARI Toshiyasu, Kanazawa-shi, Ishikawa 920-1192 (JP); TATSUNO Daichi, Kanazawa-shi, Ishikawa 920-1192 (JP)
(74) Representative: Wunderlich & Heim Patentanwälte PartG mbB
(86) International application number: PCT/JP2020/018301
(87) International publication number: WO 2020/226122

(56) References cited:
- EP-A1- 2 919 971
- EP-A1- 3 305 496
- FR-A1- 2 994 681
- JP-A- H05 200 901
- JP-A- H05 305 676
- JP-A- H05 305 676
- JP-A- H06 134 875
- JP-A- H09 267 408
- US-A- 4 440 706
- US-A- 5 409 651

## Description

### TECHNICAL FIELD

The present invention relates to a composite molded body of carbon fiber and a thermoplastic resin, and more particularly to a molding system and a production method for the composite molded body.

### BACKGROUND ART

Carbon fiber is excellent in specific strength, and its combination with resin has thus been studied.

For example, Non-Patent Document 1 discloses a technique for braiding in which carbon fiber is impregnated with an epoxy resin and heat-cured.

The reason why the carbon fiber is impregnated with the thermosetting resin in this technique is that the carbon fiber is easily impregnated with the thermosetting resin because its raw material before heat curing has a low viscosity and can be easily liquefied.

However, the combination with the thermosetting resin not only requires a long time for curing but also makes subsequent molding difficult.

On the other hand, a thermoplastic resin can be melted by being heated to a predetermined temperature but is technically problematic in poor adhesion due to high viscosity and difficulties in sufficient impregnation into carbon fiber.

It is also conceivable to impregnate the carbon fiber with the thermoplastic resin during the braiding of the carbon fiber and then perform drawing, but applying sufficient pressure is difficult in the drawing, and the adhesion between the carbon fiber and the resin material is still problematic.

Patent Document 1 discloses a fiber-reinforced resin tubular body, and the tubular body disclosed in this document is formed by spirally winding a tape obtained by blending a continuous carbon fiber and a thermoplastic resin fiber so as to partially overlap.

However, there is a high possibility that the adhesion of the overlapped portion of the tape is insufficient, and the method of spirally winding the tape has its limits on the shape that can be formed.

### RELATED ART DOCUMENT

### PATENT DOCUMENT

Patent Document 1: JP-A-2019-59808

### NON-PATENT DOCUMENT

Non-Patent Document 1: Osamu Yoshimura et al., "Development of CFRP Product Using Braiding Technology", Research Report by Industrial Research Institute of Ishikawa, 2009, No. 58, P. 37-38
Non-Patent Document 2: Toshiyasu Kinari et al., "Bio-Innovative Design Technology and Manufacturing System for CFRP Preform by Braiding Structure", (ISFA 2018-L088), 2018 International Symposium on Flexible Automation Kanazawa, Japan, 15-19 July 2018
FR 2 994 681 A1 discloses a molding system for a composite molded body.
EP 3 305 496 A1 discloses a comparable process for manufacturing hollow fiber reinforced thermoplastic bodies using a flexible pouch or bag as a core body within an outer mold.
US 5 409 651 A discloses a method with an insertable mandrel as a core for forming hollow bodies.
EP 2 919 971 A1 shows a comparable process.

### SUMMARY OF THE INVENTION

### TECHNICAL PROBLEM

An object of the invention is to provide a molding system and a production method for a composite molded body having excellent adhesion between carbon fiber and a thermoplastic resin and having a high degree of freedom in molding.

### SOLUTION TO PROBLEM

A molding system for a composite molded body according to the invention includes the features according to the preamble of claim 1.

The invention is defined by the characterising features of claim 1 and characterized in that after a cylindrical material made of carbon fiber and a thermoplastic resin is formed using a braiding machine, the cylindrical material is molded into the composite molded body while pressuring the cylindrical material from the inside at a temperature to an extent that the thermoplastic resin softens or melts, whereby it is possible to improve the mutual adhesion and obtain composite molded bodies having various shapes.

Therefore, in the braiding step, a braid may be formed using the carbon fiber and the thermoplastic resin fiber or using, for example, a composite tape obtained by laminating a thermoplastic resin sheet on unidirectional carbon fiber and performing warm pressuring and impregnation to form a tape.

Composite tapes of this type with various thermoplastic resins are commercially available and easy to obtain.

In the invention, so long as the cylindrical material obtained by the braiding can be placed into a mold or the like and warm molded while pressuring the cylindrical material from the inside, there is no restriction on the pressuring means, but for example, the warm pressure molding means includes an outer shape molding mold and an elastic insertion member inserted inside the cylindrical material to apply internal pressure.

Here, the elastic insertion member is inserted inside the cylindrical material, and when pressured relatively from both ends of the cylindrical material, the elastic insertion member expands in the lateral direction to pressure the inner peripheral surface of the cylindrical material, and the elastic insertion member is preferably a member having heat resistance, such as silicon rubber, since being warm pressured.

In the invention, due to the use of the thermoplastic resin, cooling is performed after warm pressure molding, and at this time, a shrinkage force is generated in the resin.

Thus, by using the elastic material for the pressuring and molding means, the cooling is easily performed while the pressuring state is maintained.

The elastic insertion member is divided into a plurality of elastic elements by a division surface which divides in a direction substantially orthogonal to the insertion direction.

With such division into a plurality of elastic elements, a laterally expanding force is dispersed without being concentrated at the center, so that the internal pressure is applied more uniformly.

In the invention, various production methods are conceivable by utilizing the above-referenced molding system, but the method includes the features of claim 3, for example, forming a cylindrical material with a braiding machine using a composite tape material obtained by impregnating unidirectional carbon fiber with a thermoplastic resin; and molding the cylindrical material into the composite molded body in a mold while applying internal pressure to an inside of the cylindrical material at a warm temperature.

In this case, when a heat-resistant tube is coated on the surface of a mandrel used at the time of forming the cylindrical material with the braiding machine, thereafter it is easy to remove the mandrel.

When the elastic insertion member is inserted inside the heat-resistant tube, and internal pressure is applied, at the time of the inserted elastic insertion member expanding outward and deforming, since the inserted elastic insertion member slides with the inner peripheral surface of the heat-resistant tube and the elastic insertion member is not in contact with the cylindrical material, so that there is no friction between the cylindrical material and the elastic insertion member.

As the thermoplastic resin that usable in the invention, various materials can be used.

The thermoplastic resin is not particularly limited so long as having thermal plasticity, such as a polyamide resin, a polyester resin, a polyacetal resin, a polycarbonate resin, and a polyolefin resin.

### ADVANTAGEOUS EFFECTS OF INVENTION

In the molding system for a composite molded body according to the invention, the adhesion between the carbon fiber and the thermoplastic resin is improved by combining the braiding technique and the warm pressure molding technique, and the degree of freedom in molding such as the shape of the molded body is high.

For example, even in the case of a braided body (cylindrical material) in which the thermoplastic resin composite tapes each reinforced with the unidirectional carbon fiber are overlapped in multiple layers, the overlapped portions can be integrated by subsequent warm pressure molding to improve the strength.

Further, the thermoplastic resin can be softened or melted by reheating, molded into various shapes, and then cooled to obtain a composite molded body corresponding to the application.

### BRIEF DESCRIPTION OF THE DRAWINGS

FIG. 1A schematically illustrates a braiding machine, and FIG. 1B illustrates an example of a mandrel.
FIG. 2 illustrates an example of molding of a composite molded body.
FIGS. 3A to 3C illustrate examples of forming flanges during the molding of the composite molded body.
FIG. 4 illustrates a state of a bending strength test of a composite molded body produced experimentally.
FIG. 5 illustrates results of the bending strength test.
FIG. 6 is an example of having a partition inside a cylindrical material, FIG. 6A illustrates movements of spindles, and FIG. 6B illustrates a cross section of a composite molded body.
FIGS. 7A to 7D illustrate examples of molding, using a cylindrical material in the shape of an angular pipe with a partition.
FIGS. 8A to 8C illustrate examples of molding, using a cylindrical material in the shape of an angular pipe with partition and flanges.
FIGS. 9A and 9B illustrate examples of formation of a curved beam member.
FIG. 10 illustrates an example of a braided body (cylindrical material) having a neutral yarn.
FIG. 11 illustrates molding conditions of test samples.
FIG. 12 illustrates an example of a four-point bending test machine.
FIG. 13A illustrates average bending stress, and FIG. 13B illustrates an average Young's modulus.
FIG. 14A illustrates the relationship between the neutral yarn and the strength, and FIG. 14B illustrates the relationship between the neutral yarn and the Young's modulus.
FIG. 15 illustrates an example of division of the elastic insertion member.
FIG. 16 illustrates test results.
FIG. 17A illustrates a shape of a comparative test sample of carbon-fiber-reinforced plastics (CFRP), and FIG. 17B illustrates a shape of a comparative test sample of steel plate cold commercial (SPCC).
FIG. 18A illustrates a bending test result of CFRP, and FIG. 18B illustrates a bending test result of SPCC.

### DESCRIPTION OF EMBODIMENTS

An example of a molding system and a production method for a composite molded body according to the invention will be described below with reference to the drawings, but the invention is not limited to the embodiment.

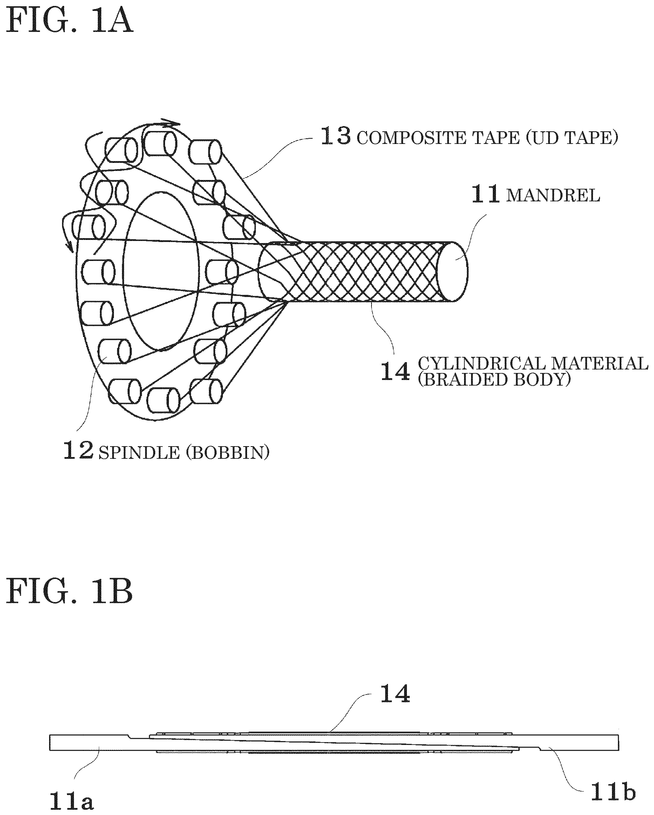

FIG. 1 illustrates the principle of braiding.

A bobbin in which a composite tape (UD tape) 13, obtained by impregnating unidirectional carbon fiber with a polyamide resin as a thermoplastic resin, is wound is attached to each of a plurality of spindles 12.

A braid can be obtained by winding the composite tapes around a mandrel 11 by the rotation and revolution of the spindles.

A UD tape having a thickness of about 0.1 mm and a width of about 3 to 10 mm is easy to obtain, and by forming multiple layers of the UD tapes, a cylindrical material 14 made of a braid having a thickness of 1 to 3 mm can be obtained.

As the UD tape, a tape with carbon fiber content of Vf = 55% was used.

When the mandrel 11 has been divided into half-shaped core members 11a, 11b with mutually tapered mating surfaces as illustrated in FIG. 1B, it is easy to pull out the mandrel 11 after the formation of the braid.

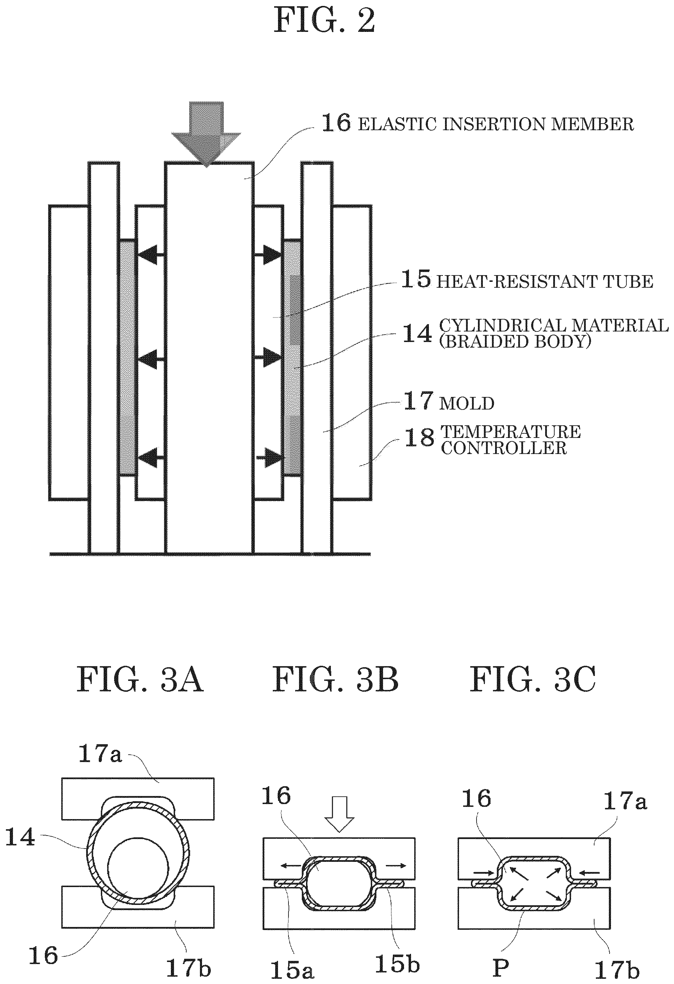

FIG. 2 illustrates an example of using a cylindrical material obtained by braiding to make a composite molded body.

In the present specification, in order to clarify that the cylindrical material has been obtained by braiding, the cylindrical material may be referred to as a braided body when necessary.

In the present embodiment, a braid was formed using the UD tape on the outer peripheral surface of the mandrel 11 previously covered with a heat-resistant tube 15 made of silicon rubber.

The mandrel 11 was pulled out with the heat-resistant tube 15 left inside the cylindrical material 14, and the cylindrical material 14 was cut to a predetermined length, and then placed inside a mold 17 as illustrated in FIG. 2.

Further, a rod-shaped elastic insertion member 16 made of silicone rubber is inserted inside the cylindrical material 14.

The mold 17 is heated by a temperature controller 18, such as a heater, to a temperature at which the thermoplastic resin comes into a molten state.

When the end (upper end) of the elastic insertion member 16 is pressured in this state, the side surface of the elastic insertion member (core) made of silicon rubber expands outward and deforms. As the internal pressure is applied to the cylindrical material 14, the cylindrical material 14 deforms to match the cavity shape of the mold 17, and the cylindrical material 14 is then cooled while internal pressure is being applied thereto, whereby the composite molded body is obtained.

At this time, the mold 17 is not limited to a circular cross-sectional shape, but for example, a rectangular cavity may be formed by molds 17a, 17b as illustrated in FIG. 3.

As illustrated in FIG. 3, flanges 15a, 15b can be formed at the same time.

In this case, since the thermoplastic resin has been used in the invention, after the cylindrical composite molded body is obtained, heating and melting are performed again to mold and cool the rectangular shape and the flanges.

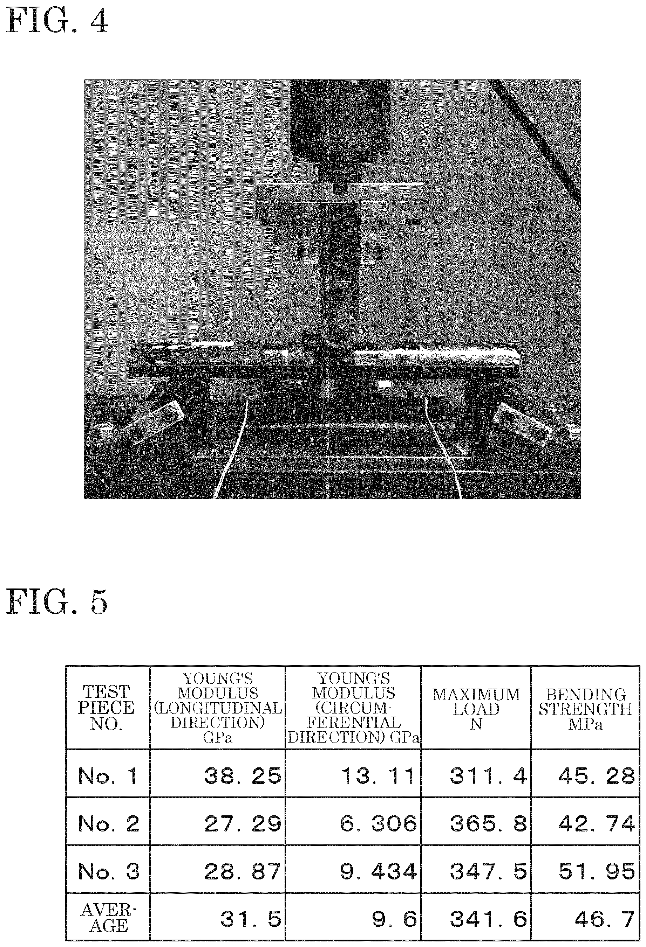

As illustrated in FIG. 4, a composite molded body P having a pipe shape with an outer diameter of 30 mm and an inner diameter of 28 mm was experimentally produced, and a three-point bending test was conducted.

FIG. 5 illustrates a table for the results of the test.

A Young's modulus in the longitudinal direction was 31.5 GPa and a bending strength was 46.7 MPa on the average value of three trial products.

According to the investigation by the inventors of the invention, these values are close to the values of CFRP with a polyamide resin as a base material.

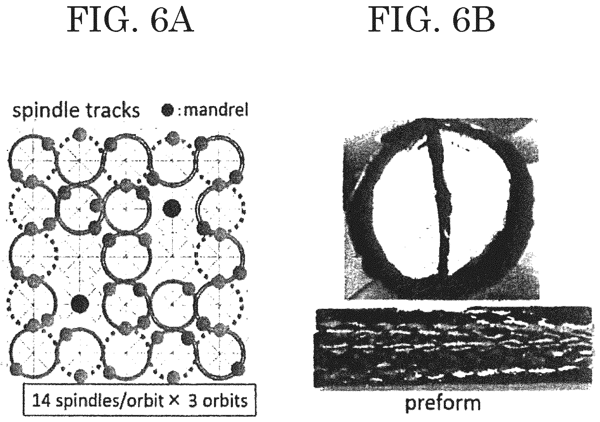

The cylindrical material used in the invention is not limited to the cylindrical shape, but a product having a plurality of hollow portions with one or more partitions disposed inside as illustrated in FIG. 6B can also be produced.

A method for forming these braids is described in Non-Patent Document 2.

Various composite molded bodies can be obtained by combining such a braiding method and the thermoplastic resin composite technique according to the invention.

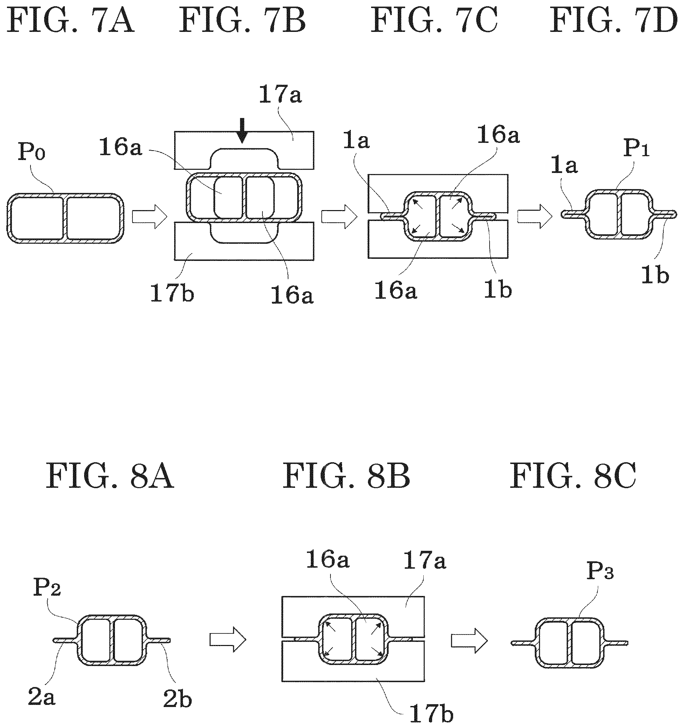

For example, in FIG. 7, a braided body (cylindrical material) formed in the shape of a rectangular pipe with hollow portions divided by a partition was placed between molds 17a, 17b, elastic insertion members 16a, 16a made of silicon rubber were inserted into the hollow portions, and molding was performed using the molds while both ends of the elastic insertion members 16a, 16a are pressured in the axial direction.

The product is taken out after cooling is performed with internal pressure applied to the elastic insertion member.

In this case, at the time of performing molding using the molds, a composite molded body P₁ is obtained in which flanges 1a, 1b are integrally molded such that laminated portions are formed on both sides of the braided body.

FIG. 8 illustrates an example in which a braided body P₂ having flanges 2a, 2b previously formed thereon is placed into molds 17a, 17b and molded in the molds while internal pressure is applied by elastic insertion members 16a, 16a to obtain a composite molded body P₃ having single flanges.

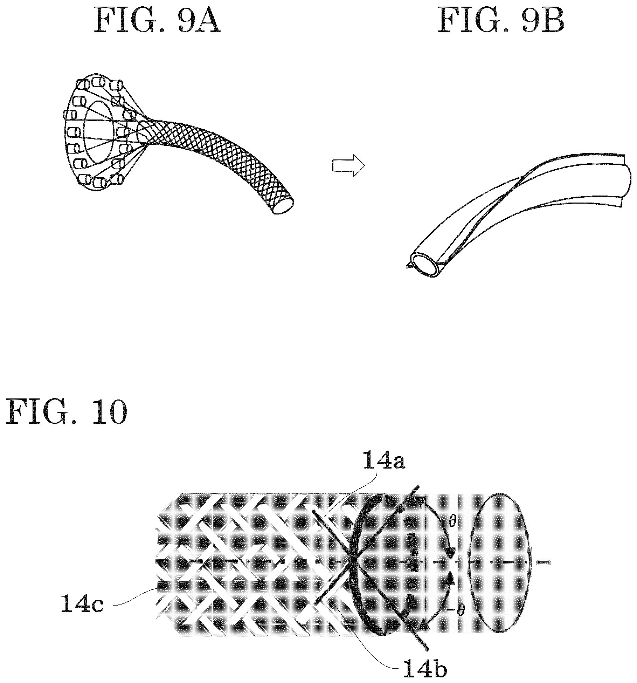

FIG. 9A illustrates an example in which a braided body is formed as a cylindrical material having a curved shape and then molded into a composite molded body having a bent shape, and FIG. 9B illustrates an example in which the cylindrical braided body is placed into a mold with a cavity having a curved shape, and while internal pressure is applied by an elastic insertion member, a beam-shaped curved composite with flanges is molded.

Next, at the time of obtaining a braided body by braiding, a braided body, obtained by adding neutral yarns 14c parallel to the mandrel axis to unidirectional carbon fibers 14a, 14b wound and aligned at a predetermined braiding angle θ with respect to a mandrel axis, was experimentally produced as illustrated in FIG. 10 and evaluated.

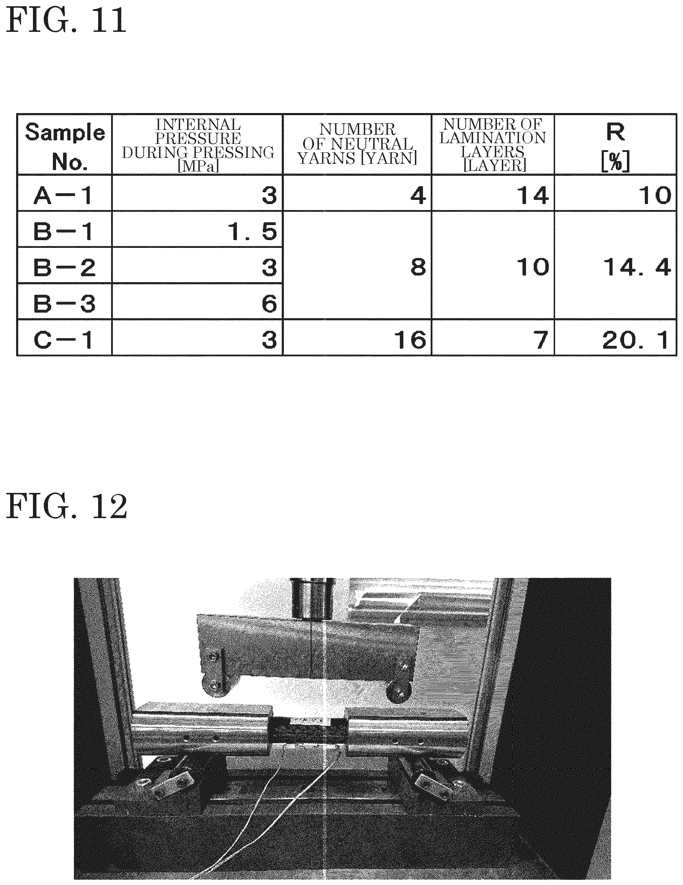

FIG. 11 illustrates conditions for preparing test samples.

The length of the test sample was 200 mm.

In the table, R [%] represents the volume content ratio of the neutral yarns to the total carbon fiber in the braided body.

The obtained test samples were evaluated, using Samples B-1 to B-3, for bending stress and Young's modulus against internal pressure during pressuring by using a four-point bending test machine as illustrated in FIG. 12.

The internal pressure applied to the braided body by the elastic insertion member is 1.5 MPa for Sample B-1, and similarly, 3 MPa for B-2, and 6 MPa for B-3.

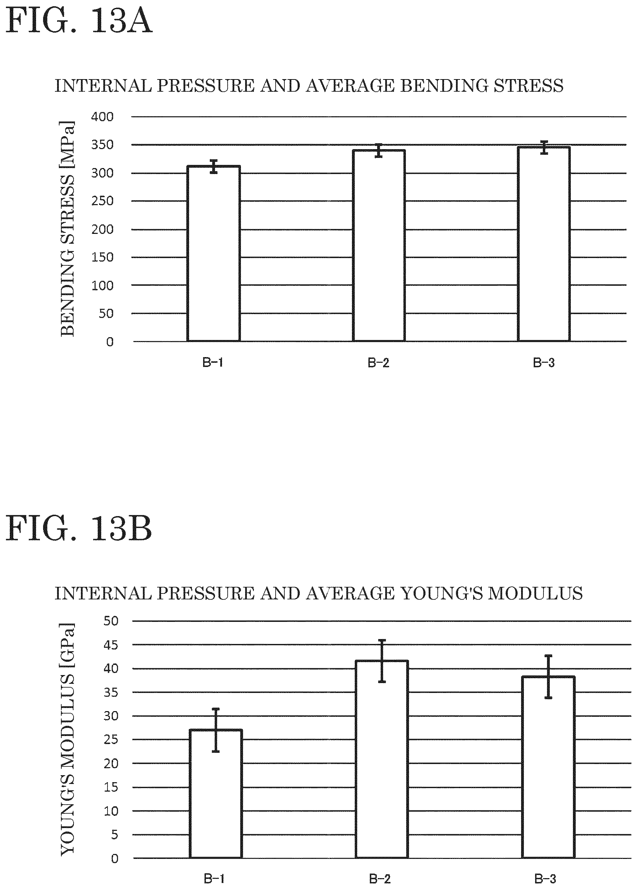

As a result, it was found that the internal pressure is preferably 1.5 MPa or more as illustrated in FIG. 13.

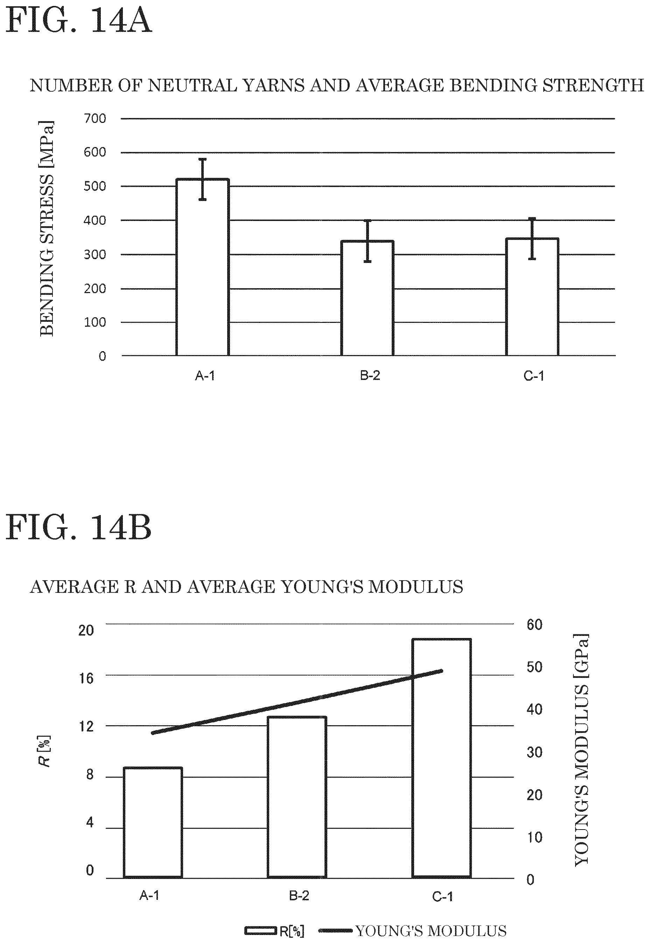

FIG. 14 illustrates results of comparison among samples with the number of neutral yarns varied at internal pressure of 3 MPa: A-1 having 4 yarns; B-2 having 8 yarns; and C-1 having 16 yarns.

In the relationship between the number of neutral yarns and the average bending strength illustrated in FIG. 14A, the bending stress was slightly lower in B-2 and C-1, having more neutral yarns than Sample A-1 having four neutral yarns, whereas in the relationship between the average R and the average Young's modulus illustrated in FIG. 14B, the Young's modulus (elastic modulus) was larger in Sample having more neutral yarns.

Next, the elastic insertion member was divided into a plurality of elastic elements and evaluated by a test in which internal pressure was applied.

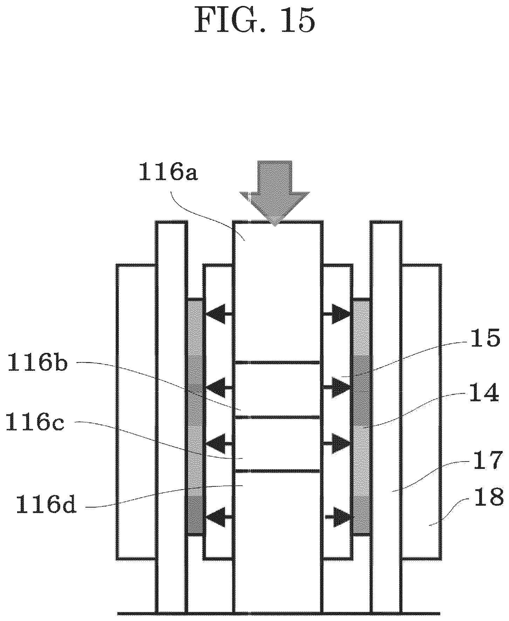

FIG. 15 illustrates an example in which the integral elastic insertion member 16 of FIG. 2 is divided into a plurality of elastic elements 116a to 116d and inserted.

In this test, elastic elements each having a length of 50 mm were inserted into a braided body of 200 mm so as to be stacked, and internal pressure of 3 MPa was applied.

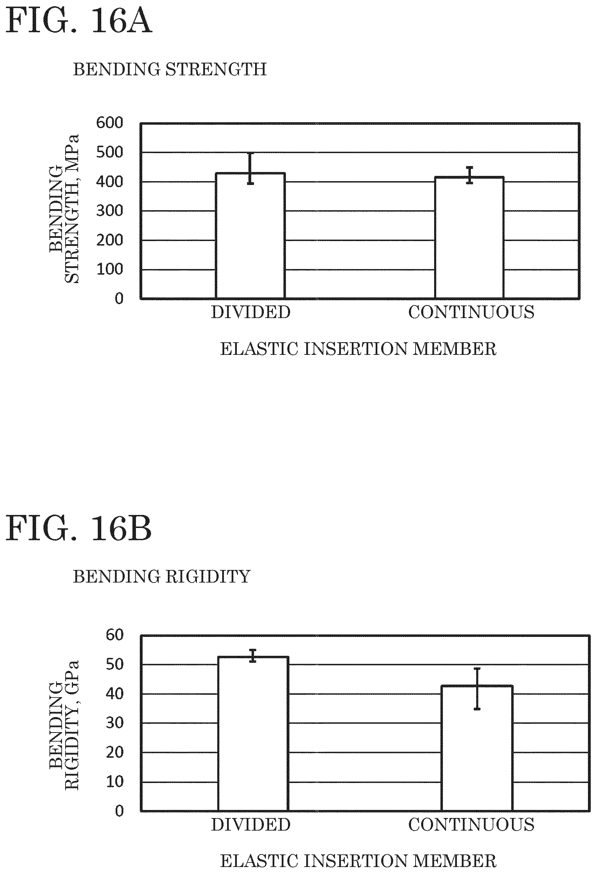

FIG. 16 illustrates the results of the test.

Thus, the strength of the composite molded body was improved more by dividing the elastic insertion member.

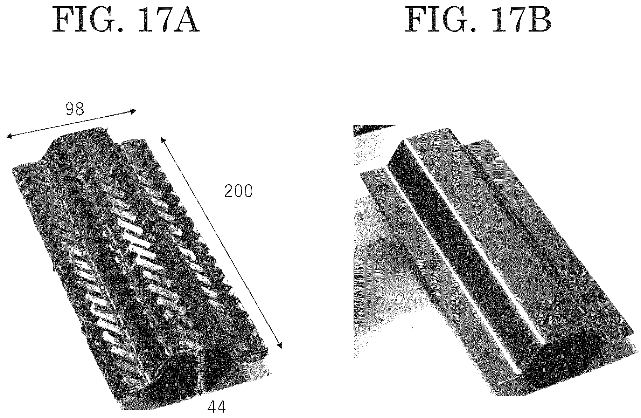

Next, as illustrated in FIG. 17, a composite molded body according to the invention and a molded body made of an SPCC material were prepared and evaluated by comparison.

FIG. 17A is a composite molded body CFRP according to the invention, and the unit of figures indicated in FIG. 17A is mm.

CFRP has a general thickness of 2.6 mm and a flange thickness of 5.2 mm.

On the other hand, SPCC has the same shape dimensions as those of CFRP, has a general thickness of 1.2 mm and a flange thickness of 2.4 mm, and has been spot-welded with a pitch of 40 mm.

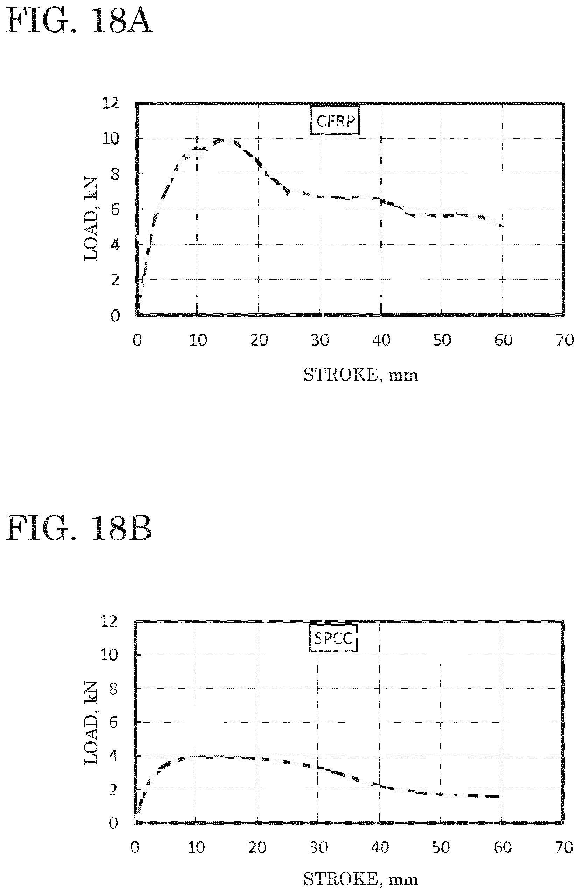

FIGS. 18A and 18B illustrate the results of the three-point bending test.

The results were that the weight was 180 g for CFRP and 440 g for SPCC and that the maximum load in the bending test was 10 kN for CFRP and 4 kN for SPCC.

This made it clear that the bending load of CFRP is 2.5 times as large as that of SPCC, while the weight of CFRP is about 40% of that of SPCC.

### INDUSTRIAL APPLICABILITY

A composite molded body according to the invention has high strength but yet has a high degree of freedom in molding and is applicable to structural members in various fields.

### REFERENCE SIGN LIST

- 11: mandrel
- 12: spindle (bobbin)
- 13: composite tape (unidirectional (UD) tape)
- 14: cylindrical material (braided body)
- 15: heat-resistant tube
- 16: elastic insertion member
- 17: mold
- 18: temperature controller

## Claims

1. A molding system for a composite molded body, the system comprising:
braiding means that braids a cylindrical material (14) made of a composite material (13) of carbon fiber and a thermoplastic resin; and
warm pressure molding means that warm molds the cylindrical material (14) into the composite molded body while pressuring the cylindrical material (14) from the inside,
wherein the warm pressure molding means includes:
an outer shape molding mold (17);
a rod-shaped rubber elastic insertion member (16) inserted inside the cylindrical material (14),
pressuring means that pressures the rod-shaped rubber elastic insertion member (16) in an axial direction from an end of the rod-shaped rubber elastic insertion member (16) in the axial direction, and wherein
the rod-shaped rubber elastic insertion member (16) is silicon rubber and is divided into a plurality of elastic elements, and
when the rod-shaped rubber elastic insertion member (16) is pressured from the end in the axial direction, a side surface of the rod-shaped rubber elastic insertion member (16) expands outward, and internal pressure is applied to the cylindrical material (14), and the cylindrical material (14) is deformed to match a cavity shape of the outer shape molding mold (17).

2. The molding system for a composite molded body according to claim 1, wherein the composite material (13) of the carbon fiber and the thermoplastic resin is a composite tape material of unidirectional carbon fiber and the thermoplastic resin.

3. A method for producing a composite molded body, the method comprising:
using a composite tape material (13) obtained by impregnating unidirectional carbon fiber with a thermoplastic resin to produce a cylindrical material (14) with a braiding machine (11, 12); and
molding the cylindrical material (14) into the composite molded body by placing the cylindrical material (14) into an outer shape molding mold (17), inserting a rod-shaped rubber elastic insertion member (16) which is silicon rubber and which is divided into a plurality of elastic elements, inside the cylindrical material (14) and pressuring the rod-shaped rubber elastic insertion member (16) in an axial direction from an end of the rod-shaped rubber elastic insertion member (16) in the axial direction at a warm temperature, so that a side surface of the rod-shaped rubber elastic insertion member (16) expands outward, and internal pressure is applied to the cylindrical material (14), the cylindrical material (14) deforms to match a cavity shape of the outer shape molding mold (17) and is then cooled while internal pressure is being applied.

4. The method for producing a composite molded body according to claim 3, wherein a heat-resistant tube (15) is coated on a surface of a mandrel used at a time of forming the cylindrical material (14) with the braiding machine (11, 12)
the mandrel (11) is removed, and
the rod-shaped rubber elastic insertion member (16) is inserted inside the heat-resistant tube (15).

## Patentansprüche

1. Formsystem für einen Verbundformkörper, wobei das System aufweist:
eine Flechtvorrichtung, welche ein zylindrisches Material (14) aus einem Verbundmaterial (13) aus Kohlenstofffasern und einem thermoplastischen Harz verflechtet; und
eine Warmpressformvorrichtung, welche das zylindrische Material (14) zu dem Verbundformkörper warmformt, während sie das zylindrische Material (14) von innen unter Druck setzt, wobei die Warmpressformvorrichtung aufweist:
eine Außenform-Formwerkzeug (17);
ein stabförmiges elastisches Gummieinsatzelement (16), welches in das zylindrische Material (14) eingeführt wird,
eine Pressvorrichtung, welche das stabförmige elastische Gummieinsatzelement (16) in axialer Richtung von einem Ende des stabförmigen elastischen Gummieinsatzelements (16) in axialer Richtung unter Druck setzt, und wobei
das stabförmige elastische Gummieinsatzelement (16) aus Silikongummi besteht und in eine Vielzahl elastischer Elemente unterteilt ist, und
wenn das stabförmige elastische Gummieinsatzelement (16) vom Ende in axialer Richtung unter Druck gesetzt wird, sich eine Seitenfläche des stabförmigen elastischen Gummieinsatzelements (16) nach außen ausdehnt und ein Innendruck auf das zylindrische Material (14) ausgeübt wird, und das zylindrische Material (14) verformt wird, um sich an die Hohlraumform des Außenform-Formwerkzeuges (17) anzupassen.

2. Formsystem für einen Verbundformkörper nach Anspruch 1, wobei
das Verbundmaterial (13) der Kohlenstofffaser und des thermoplastischen Harzes ein Verbundbandmaterial aus unidirektionaler Kohlenstofffaser und dem thermoplastischen Harz ist.

3. Verfahren zum Herstellen eines Verbundformkörpers, wobei das Verfahren aufweist:
Verwenden eines Verbundbandmaterials (13), welches durch Imprägnieren von unidirektionaler Kohlenstofffaser mit einem thermoplastischen Harz erhalten wird, um ein zylindrisches Material (14) mit einer Flechtmaschine (11, 12) herzustellen; und
Formen des zylindrischen Materials (14) zu dem Verbundformkörper durch Einlegen des zylindrischen Materials (14) in das Außenform-Formwerkzeug (17),
Einführen eines stabförmigen elastischen Gummieinsatzelements (16), welches aus Silikongummi besteht und in eine Vielzahl elastischer Elemente unterteilt ist, in das zylindrische Material (14) und
unter Druck setzen des stabförmigen elastischen Gummieinsatzelements (16) bei warmer Temperatur in axialer Richtung von einem Ende des stabförmigen elastischen Gummieinsatzelements (16) in axialer Richtung, sodass sich eine Seitenfläche des stabförmigen elastischen Gummieinsatzelements (16) nach außen ausdehnt und ein Innendruck auf das zylindrische Material (14) ausgeübt wird, wobei sich das zylindrische Material (14) entsprechend der Hohlraumform des Außenform-Formwerkzeuges (17) verformt und dann unter Aufrechterhaltung des Innendrucks gekühlt wird.

4. Verfahren zum Herstellen eines Verbundformkörpers nach Anspruch 3, wobei
ein hitzebeständiges Rohr (15) auf eine Oberfläche eines Dorns aufgebracht wird, welcher zum Zeitpunkt des Formens des zylindrischen Materials (14) mit der Flechtmaschine (11, 12) verwendet wird,
der Dorn (11) entfernt wird und das elastische Gummieinsatzelement (16) in das hitzebeständige Rohr (15) eingeführt wird.

## Revendications

1. Système de moulage destiné à un corps moulé composite, le système comprenant :
un moyen de tressage servant à tresser un matériau cylindrique (14) constitué d'un matériau composite (13) de fibre de carbone et d'une résine thermoplastique ; et
un moyen de moulage par pression à chaud servant à mouler à chaud le matériau cylindrique (14) de façon à former le corps moulé composite pendant la mise sous pression du matériau cylindrique (14) à partir de l'intérieur,
dans lequel le moyen de moulage par pression à chaud comporte :
un moule de moulage de forme externe (17) ;
un élément d'insertion élastique en caoutchouc en forme de tige (16) introduit à l'intérieur du matériau cylindrique (14) ;
un moyen de mise sous pression servant à mettre sous pression l'élément d'insertion élastique en caoutchouc en forme de tige (16) dans un sens axial à partir d'une extrémité de l'élément d'insertion élastique en caoutchouc en forme de tige (16) dans le sens axial, et dans lequel
l'élément d'insertion élastique en caoutchouc en forme de tige (16) est en caoutchouc de silicium et est divisé en une pluralité d'éléments élastiques, et
lorsque l'élément d'insertion élastique en caoutchouc en forme de tige (16) est mis sous pression à partir de l'extrémité dans le sens axial, une surface latérale de l'élément d'insertion élastique en caoutchouc en forme de tige (16) s'élargit vers l'extérieur, et une pression interne est appliquée au matériau cylindrique (14), et le matériau cylindrique (14) est déformé afin de correspondre à une forme de cavité du moule de moulage de forme externe (17).

2. Le système de moulage destiné à un corps moulé composite selon la revendication 1, dans lequel le matériau composite (13) de fibre de carbone et de résine thermoplastique est un matériau en bande composite de fibre de carbone unidirectionnelle et de résine thermoplastique.

3. Procédé de production d'un corps moulé composite, le procédé comprenant :
l'utilisation d'un matériau en bande composite (13) obtenu au moyen de l'imprégnation d'une fibre de carbone unidirectionnelle avec une résine thermoplastique afin de produire un matériau cylindrique (14) à l'aide d'une machine de tressage (11, 12) ; et
le moulage du matériau cylindrique (14) de façon à former le corps moulé composite au moyen du placement du matériau cylindrique (14) dans un moule de moulage de forme externe (17), de l'introduction d'un élément d'insertion élastique en caoutchouc en forme de tige (16), lequel est en caoutchouc de silicium et est divisé en une pluralité d'éléments élastiques, à l'intérieur du matériau cylindrique (14), et de la mise sous pression de l'élément d'insertion élastique en caoutchouc en forme de tige (16) dans un sens axial à partir d'une extrémité de l'élément d'insertion élastique en caoutchouc en forme de tige (16) dans le sens axial à une température chaude, de telle manière qu'une surface latérale de l'élément d'insertion élastique en caoutchouc en forme de tige (16) s'élargisse vers l'extérieur, et qu'une pression interne soit appliquée au matériau cylindrique (14), le matériau cylindrique (14) se déformant afin de correspondre à une forme de cavité du moule de moulage de forme externe (17) et étant ensuite refroidi pendant qu'une pression interne est appliquée.

4. Le procédé de production d'un corps moulé composite selon la revendication 3, dans lequel un tube résistant à la chaleur (15) est revêtu sur une surface d'un mandrin utilisé à un moment de la formation du matériau cylindrique (14) à l'aide de la machine de tressage (11, 12),
le mandrin (11) est retiré, et
l'élément d'insertion élastique en caoutchouc en forme de tige (16) est introduit à l'intérieur du tube résistant à la chaleur (15).
